# EUROPÄISCHE PATENTSCHRIFT

(11) **EP 1 548 348 B1**
(45) Veröffentlichungstag und Bekanntmachung des Hinweises auf die Patenterteilung: **21.01.2009**
(21) Anmeldenummer: 04028067.9
(22) Anmeldetag: 26.11.2004
(51) Int. Cl.: F16L 41/08, F16L 21/035

(54) **Dichtungsanordnung, insbesondere für einen Anschluss einer Leitung an einem Expansionsorgan**
Sealing arrangement, in particular for a pipe connection to an expansion element
Dispositif d'étanchéité, en particulier pour le raccordement d'un tuyau à un organe d'expansion

(30) Priorität: 22.12.2003 DE 10361109
(43) Veröffentlichungstag der Anmeldung: 29.06.2005
(73) Patentinhaber: Behr GmbH & Co. KG, 70469 Stuttgart (DE)
(72) Erfinder: Fetzer, Tobias, 89077 Ulm (DE); Hadler, Jens, 70197 Stuttgart (DE); Mangold, Markus, 70569 Stuttgart (DE); Neuhäusler, Marco, 73469 Utzmemmingen (DE); Schmadl, Dieter, Dipl.-Ing., 71672 Marbach (DE); Schmidt, Markus, 70771 Leinfelden-Echterdingen (DE); Berger, Michael, 70563 Stuttgart (DE); Hughes, Peter, 70619 Stuttgart (DE); Simon, Lubens, 70469 Stuttgart (DE)

(56) Entgegenhaltungen:
- EP-A- 0 916 886
- DE-A1- 2 510 208
- GB-A- 1 559 623
- US-A1- 2003 214 130
- US-B1- 6 260 851

## Beschreibung

Die Erfindung betrifft eine Dichtungsanordnung, insbesondere für einen Anschluss einer Leitung an einem Expansionsorgan einer Kraftfahrzeug-Klimaanlage, gemäß dem Oberbegriff des Anspruchs 1.

Zur Abdichtung von Übergängen zwischen vier Leitungen und einem Expansionsorgan, in der Regel ein 4-Wege-Blockventil, ist bei herkömmlichen Kraftfahrzeug-Klimaanlagen eine jeweils eine O-Ring-Dichtung vorgesehen, wobei der O-Ring in einer Ringnut angeordnet ist, welche entweder im Expansionsorgan-Gehäuse oder am Außenumfang der Leitung ausgebildet ist. Ebenfalls ist die Verwendung von Flachdichtungen bekannt.

Derartige Dichtungsanordnungen sind z.B. aus EP-A-0 916 886 oder US-A-3 929 356 bekannt.

An den verdampferseitigen Leitungen sind üblicherweise Rohrsicken mit entsprechend am Expansionsorgan verschraubten Halteplatten verwendet, während auf der anderen Seite (Nutzerseite) häufig Einzel- oder Doppelflansche verwendet werden. Hierbei treten bei Beschädigung des Dichtelements oder bei Verschmutzungen durch Fremdelemente, wie Späne, oder Verunreinigungen oder bei falscher Montage des Dichtelements Leckagen auf, so dass die Umwelt durch das Kältemittel, in der Regel R134a, belastet wird, die Kälteleistung sinkt und die Nutzungsdauer verkürzt wird.

Eine derartige Dichtungsanordnung lässt daher noch Wünsche, insbesondere in Hinblick auf die Dichtheit, offen.

Es ist Aufgabe der Erfindung, eine verbesserte Dichtungsanordnung zur Verfügung zu stellen.

Diese Aufgabe wird gelöst durch eine Dichtungsanordnung mit den Merkmalen des Anspruchs 1. Vorteilhafte Ausgestaltungen sind Gegenstand der Unteransprüche.

Erfindungsgemäß ist eine Dichtungsanordnung vorgesehen, die mindestens und vorzugsweise genau zwei Dichtelemente aufweist. Dabei sind die Dichtelemente zwischen einer Leitung und einem Bauteil vorgesehen, wobei das Bauteil eine Öffnung aufweist, in die das Ende der Leitung hineinragt. Bevorzugt handelt es sich bei mindestens einem der Dichtelemente um einen O-Ring. Flachdichtungen oder Profildichtungen kommen ebenfalls in Frage. O-Ringe gibt es in den unterschiedlichsten Abmessungen, das heißt Schnurdurchmessern und Ringdurchmessern, sowie den unterschiedlichsten Härten, so dass Standardteile verwendet werden können, die preisgünstig zu erwerben sind. Auf Grund der weiten Verbreitung von O-Ringen sind ausreichende Erfahrungswerte vorhanden, so dass die Anzahl von Versuchen und damit der Entwicklungsaufwand gering gehalten werden kann. Bevorzugt werden O-Ringe aus EPDM oder HNBR verwendet, insbesondere wenn das Kältemittel R134a abgedichtet werden soll. Flachdichtungen haben den Vorteil, dass sie nicht oder nur unwesentlich verrutschen. Insbesondere bei der Verwendung von CO₂ als Kältemittel werden bevorzugt Flachdichtungen, insbesondere metallische Flachdichtungen, oder andere bevorzugt metallische Dichtelemente verwendet.

Vorzugsweise ist mindestens ein Dichtelement in einer am Außenumfang der Leitung vorgesehen Sicke oder Nut oder in einer an einer Innenmantelfläche des Bauteils vorgesehenen Ringnut angeordnet.

Alternativ oder in Kombination hiermit ist bevorzugt mindestens ein Dichtelement in Anlage an einem am Außenumfang der Leitung vorgesehen Flansch. Dabei kann das Dichtelement in einer an der Stirnfläche des Bauteils vorgesehenen Ringnut angeordnet sein.

Um einen schrägen Kraftverlauf zu erzeugen ist mindestens ein Dichtelement am Außenumfang der Leitung angeordnet und in Anlage an einem am Außenumfang der Leitung vorgesehen Flansch.

Bevorzugt dichten mindestens zwei der Dichtelemente in unterschiedlichen Richtungen ab, also beispielsweise in axialer Richtung (bei radialer Zusammenpressung des entsprechenden Dichtelements) und in radialer Richtung (bei axialer Zusammenpressung des entsprechenden Dichtelements). Ebenfalls ist ein schräges Zusammenpressen eines Dichtelements möglich.

Gemäß einer vorteilhaften Ausführungsform sind mehrere in die gleiche Richtung abdichtende Dichtelemente hintereinander angeordnet. Somit kann die Dichtwirkung unter Umständen ohne unzumutbaren Platzbedarf verbessert werden.

Die Positionsbestimmung des Dichtelements kann mittels eines Hilfselements erfolgen, das auf die Leitung aufgepasst oder in die Öffnung eingepasst wird, so dass das Dichtelement in einer Ringnut angeordnet ist.

Zur Vermeidung von Beschädigungen der Dichtelemente bei der Montage sind bevorzugt die Übergänge zwischen einzelnen Stufen mit unterschiedlichen Durchmessern abgerundet.

Vorzugsweise ist zur Zentrierung der Leitung bei der Montage in einem Leitungsendbereich ein Führungselement, insbesondere aus Kunststoff, angeordnet. Dieses wird bevorzugt durch einen Führungsring gebildet, welcher eine dem Außenumfang des Leitungsendbereichs entsprechende Innenkontur aufweist, wobei sich der Außenumfang des Leitungsendbereichs zum Leitungsende hin verkleinert, insbesondere in Form einer Fase.

Gemäß einem vorteilhaften Ausführungsbeispiel ist eine innere Querschnittsfläche der Dichtungsanordnung so groß wie oder größer als eine innere Querschnittsfläche der Leitung und/oder des Bauteils. Dies bedeutet, dass ein die Dichtungsanordnung durchströmendes Medium keiner Engstelle ausgesetzt ist, so dass ein Strömungswiderstand der Dichtungsanordnung verringert oder vermieden wird.

Im Folgenden wird die Erfindung anhand von mehreren Ausführungsbeispielen, teilweise mit Varianten, unter Bezugnahme auf die Zeichnung im Einzelnen erläutert. In der Zeichnung zeigen:
- Fig. 1: eine perspektivische Ansicht einer Dichtungsanordnung in teilweiser Explosionsdarstellung gemäß dem Stand der Technik,

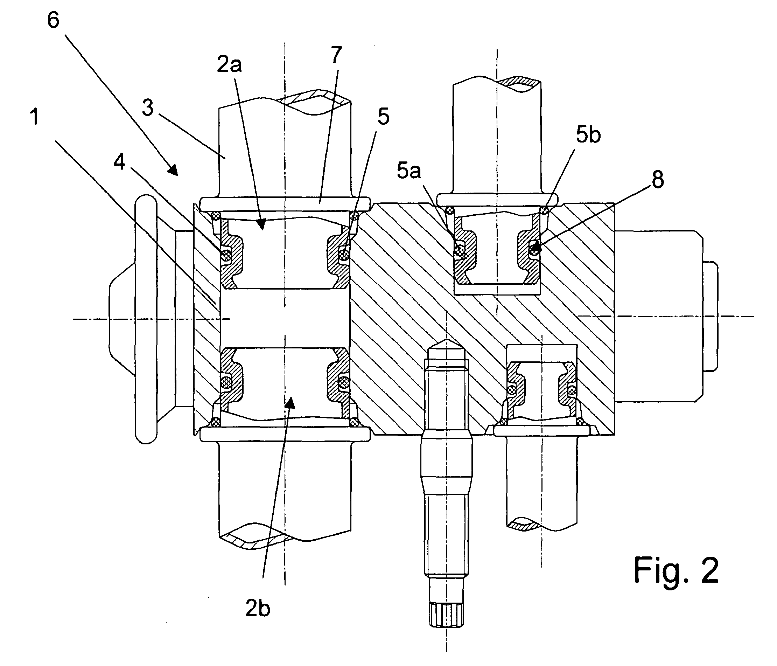

- Fig. 2: einen Schnitt durch die Dichtungsanordnung von Fig. 1,
- Fig. 3: einen Schnitt durch eine Dichtungsanordnung gemäß dem ersten Ausführungsbeispiel,
- Fig. 4: einen Schnitt durch eine Dichtungsanordnung gemäß dem Stand der Technik,
- Fig. 5: einen Schnitt durch eine Dichtungsanordnung gemäß dem Stand der Technik,
- Fig. 6: einen Schnitt durch eine Dichtungsanordnung gemäß dem zweiten Ausführungsbeispiel,
- Fig. 7: einen Schnitt durch eine Dichtungsanordnung gemäß dem Stand der Technik,
- Fig. 8: einen Schnitt durch eine Dichtungsanordnung gemäß dem Stand der Technik,
- Fig. 9: einen Schnitt durch ein Expansionsventil mit vier Leitungen mit Dichtungsanordnungen gemäß dem Stand der Technik,
- Fig. 10: eine Seitenansicht des Expansionsventils von Fig. 9 ohne Darstellung der Leitungen,
- Fig. 11: einen Schnitt durch eine der Dichtungsanordnungen von Fig. 9, wobei die Dichtelemente unverformt dargestellt sind,
- Fig. 12: einen Schnitt durch ein Expansionsventil mit vier Leitungen mit Dichtungsanordnungen gemäß der Variante des Ausführungsbeispiels von Fig. 9.
- Fig. 13: eine Seitenansicht des Expansionsventils von Fig. 12 ohne Darstellung der Leitungen,
- Fig. 14: einen Schnitt durch eine der Dichtungsanordnungen von Fig. 12, wobei die Dichtelemente unverformt dargestellt sind,
- Fig. 15: einen Schnitt durch ein Expansionsventil mit vier Leitungen mit Dichtungsanordnungen gemäß dem Stand der Technik,
- Fig. 16: eine Seitenansicht des Expansionsventils von Fig. 15 ohne Darstellung der Leitungen, und
- Fig. 17: einen Schnitt durch eine der Dichtungsanordnungen von Fig. 15, wobei die Dichtelemente unverformt dargestellt sind.

Ein Expansionsorgan, vorliegend ein Expansionsventil 1, einer Kraftfahrzeug-Klimaanlage, bei welcher R134a als Kältemittel verwendet wird, weist je zwei verdampferseitige Öffnungen 2a und zwei nutzerseitige Öffnungen 2b auf, in die je eine Leitung 3 geführt ist. Zur Abdichtung zwischen einzelnen Leitungen 3 und dem Expansionsventil 1, vorliegend einem 4-Wege-Blockventil, sind jeweils zwei Dichtelemente 4, gemäß dem ersten Ausführungsbeispiel zwei O-Ringe 5 aus EPDM oder HNBR je Leitung 3, vorgesehen. Hierbei sind sowohl verdampferseitig als auch nutzerseitig jeweils einander entsprechende Dichtungsanordnungen 6 mit zwei im Wesentlichen in radialer Richtung angepressten O-Ringen 5 zwischen den Leitungen 3 und dem Expansionsventil 1 vorgesehen. Dabei wird im Folgenden der O-Ring 5, der näher am Leitungsende angeordnet ist, als erster O-Ring 5a und der andere O-Ring 5 als zweiter O-Ring 5b bezeichnet.

Die Leitungen 2 weisen zur Positionierung der O-Ringe 5 an ihrem expansionsventilseitigen Ende einen Flansch 7 und eine Sicke 8 auf. Die Öffnungen 2a und 2b weisen jeweils im Bereich, in den die entsprechende Leitung 3 ragt und etwas darüber hinaus, einen im Wesentlichen zylinderförmigen Querschnitt auf, der sich nach außen hin in zwei Stufen erweitert, wobei die Übergänge zwischen den Stufen abgerundet oder zumindest abgeschrägt sind, um bei der Montage die O-Ringe 5 nicht zu beschädigen. Der erste O-Ring 5a ist in der Sicke 8 positioniert und wird gegen den im Wesentlichen zylinderförmigen Teil der entsprechenden Öffnung 2a bzw. 2b gepresst. Der zweite O-Ring 5b, welcher einen größeren Durchmesser als der erste O-Ring 5a aufweist, liegt an der endseitigen Fläche des Flansches 7 und dem Außenumfang der Leitung 3 an und wird gegen den abgerundeten Endbereich der ersten Stufe gepresst. Der Flansch 7 liegt gemäß dem ersten Ausführungsbeispiel am Übergang zwischen der ersten und der zweiten Stufe an, wobei die zweite Stufe lediglich der ganzen oder teilweisen Aufnahme des Flansches 7 dient.

Hierbei herrscht im Idealfall, das heißt sofern keiner der beiden O-Ringe 5 je Dichtungsanordnung 6 beschädigt ist und keine anderen Leckagegründe vorliegen, im Bereich vor dem ersten O-Ring 5a der statische Innendruck, beispielsweise ca. 6bar, im Zwischenraum zwischen dem ersten O-Ring 5a und dem zweiten O-Ring 5b der atmosphärische Druck und außerhalb des zweiten O-Ringes 5b ebenfalls der atmosphärische Druck.

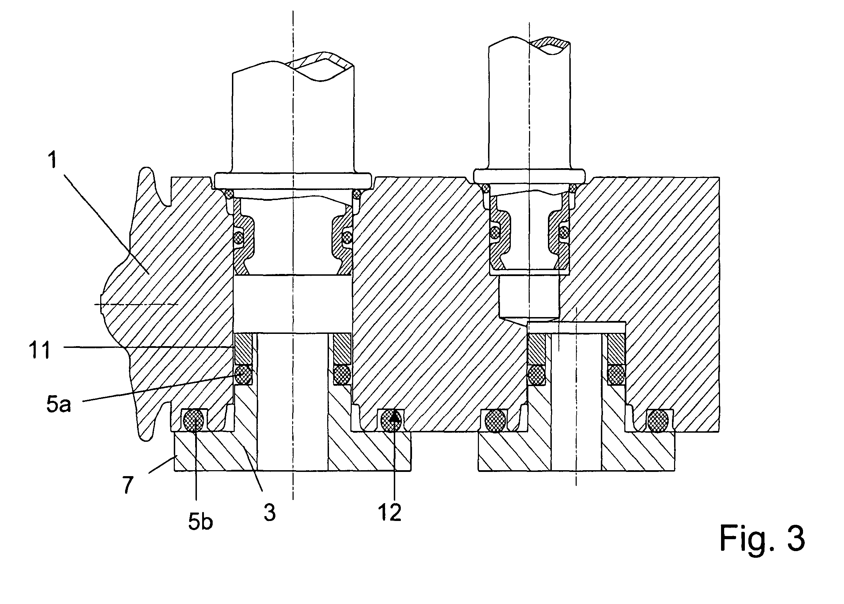

Gemäß dem in Fig. 3 dargestellten ersten Ausführungsbeispiel ist nutzerseitig, in Fig. 3 wie auch den folgenden Figuren unten dargestellt, die Leitung 3 spanabhebend derart bearbeitet, dass sie mehrere Stufen mit zum Ende hin abnehmenden Außendurchmesser aufweist. Hierbei ist endseitig, das heißt auf der Stufe mit dem kleinsten Außendurchmesser, ein erster O-Ring 5a angeordnet, welcher mittels eines Hilfselements 11 positioniert ist. Das Hilfselement 11 ist zylinderförmig ausgebildet, wobei zwischen der Stufe mit dem kleinsten Außendurchmesser und dem Hilfselement 11 kleine, in der Fig. 3 nicht dargestellte Hinterschneidungen vorgesehen sind, so dass das Hilfselement 11 reib- und formschlüssig auf der Leitung 3 sitzt. Alternativ kann das Hilfselement beispielsweise auch aufgeschrumpft oder mittels Kleben an der Leitung 3 befestigt werden. Der erste O-Ring 5a wird hierbei in radialer Richtung gegen den im Wesentlichen zylinderförmigen Teil der Öffnung 2b gepresst.

Der zweite O-Ring 5b, welcher verglichen mit dem ersten Ausführungsbeispiel, einen deutlich größeren Durchmesser als der erste O-Ring 5a aufweist, ist stirnseitig in einer Ringnut 12 angeordnet, die im Expansionsventil 1 ausgebildet und die von einem Flansch 7 der Leitung 3 verschlossen wird. Dabei wird er in axialer Richtung gegen das Expansionsventil 1 gepresst.

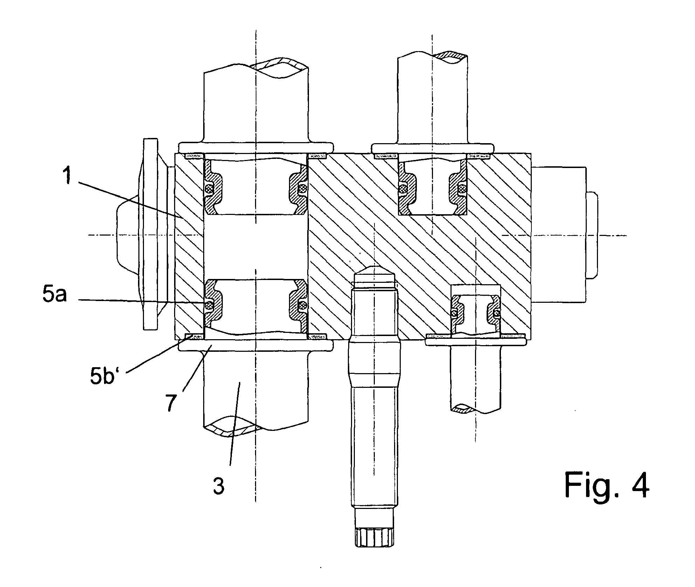

Beim in Fig. 4 dargestellten Ausführungsbeispiel wird sowohl verdampferseitig als auch nutzerseitig an Stelle des zweiten O-Rings 5b eine Flachdichtung 5b' verwendet, wobei der Flansch 7 der Leitung 3 die Flachdichtung 5b' in eine ringförmige Ausnehmung im Expansionsventil 1 presst. Die Anordnung des ersten O-Rings 5a entspricht der des ersten Ausführungsbeispiels.

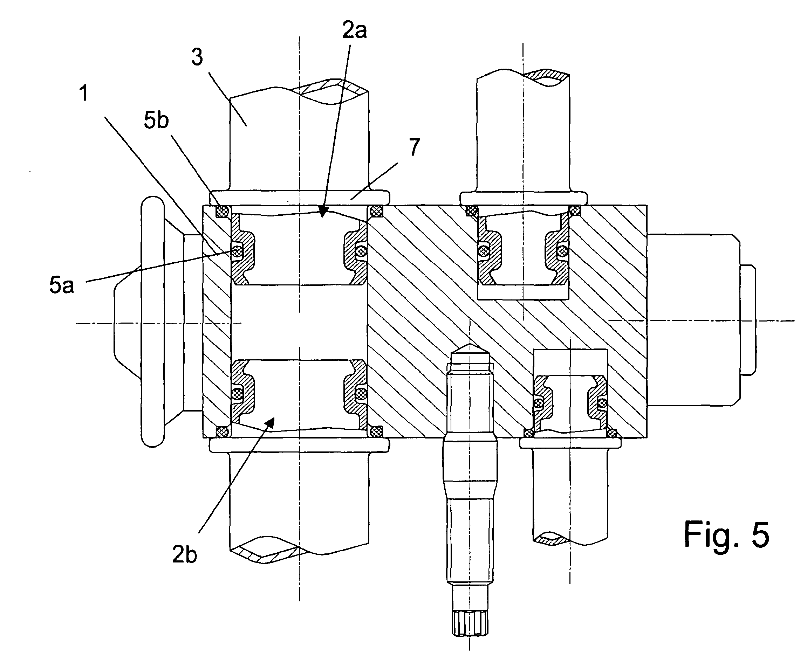

Gemäß dem in Fig. 5 dargestellten Ausführungsbeispiel sind wiederum zwei O-Ringe 5a und 5b als Dichtelemente vorgesehen, wobei die Anordnung des erstem O-Rings 5a der des ersten Ausführungsbeispiels entspricht. Der zweite O-Ring 5b, welcher einen Innendurchmesser aufweist, der etwas größer als der Durchmesser der Öffnung 2a bzw. 2b ist, ist in einer ringförmigen Ausnehmung im Expansionsventil 1 angeordnet, wobei er von einem Flansch 7 der Leitung 3 gegen die demselben gegenüberliegende Fläche der Ausnehmung gepresst wird. Der zweite O-Ring 5b liegt hierbei nur an der endseitigen Stirnfläche des Flansches 7 und nicht an der Außenmantelfläche der Leitung 3 an.

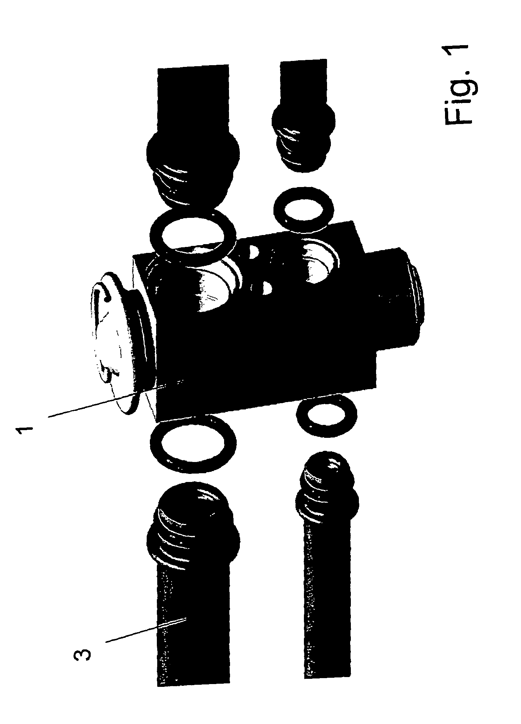

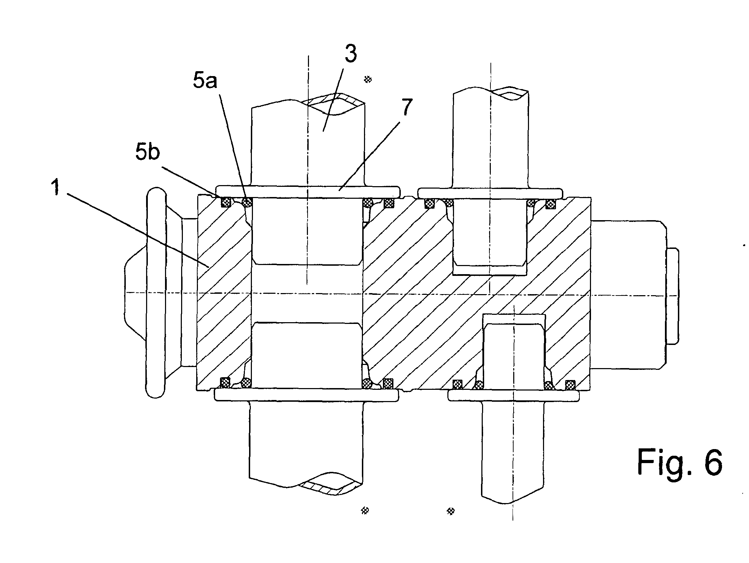

Fig. 6 zeigt das zweite Ausführungsbeispiel gemäß dem die beiden O-Ringe 5a und 5b etwa koaxial zueinander angeordnet sind, wofür für den äußeren, zweiten O-Ring 5b eine ringförmige Nut an der Stirnfläche des Expansionsventils 1 vorgesehen ist und er durch einen Flansch 7 der Leitung 3 in Richtung des Nutgrunds gepresst wird. Der innere, erste O-Ring 5a liegt am Übergang zwischen Flansch 7 und Außenmantelfläche der Leitung 3 sowie einem abgerundeten Übergang von einer ersten zu einer zweiten Stufe an (vgl. Ring 5b des Ausführungsbeispiels von Fig. 1).

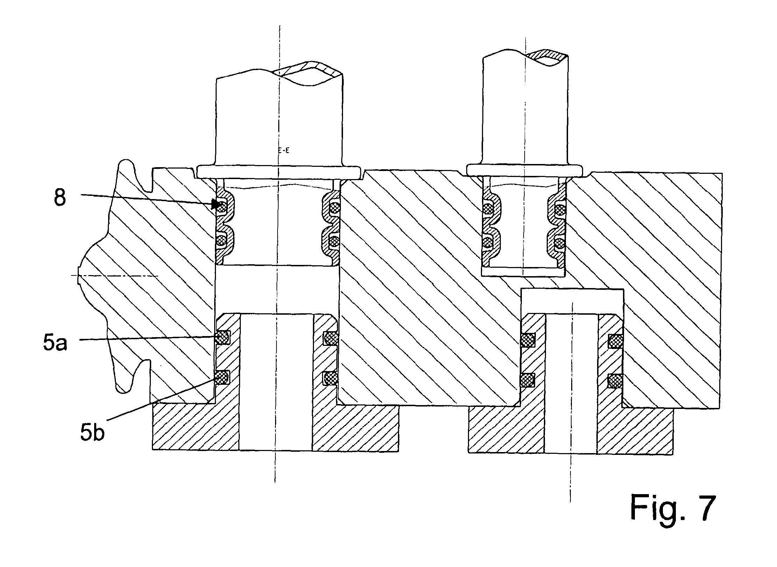

Das Ausführungsbeispiel, das in Fig. 7 dargestellt ist, sieht eine Anordnung zweier gleicher O-Ringe 5a und 5b hintereinander in zwei einander entsprechenden Sicken 8 (verdampferseitig) bzw. Ringnuten (nutzerseitig) vor.

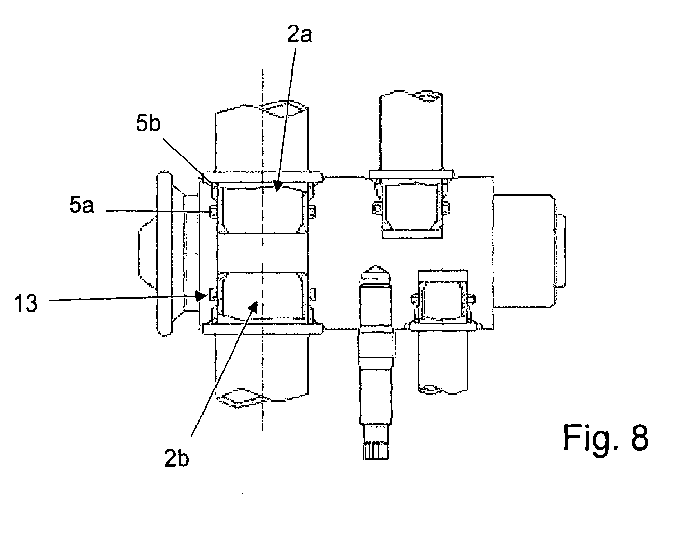

Gemäß dem in Fig. 8 dargestellten Ausführungsbeispiel entspricht die Anordnung des zweiten O-Rings 5b der des ersten Ausführungsbeispiels. Der erste O-Ring 5a ist in einer an der Innenmantelfläche der Öffnung 2a bzw. 2b vorgesehenen Ringnut 13 angeordnet und das Ende der Leitung 3 weist keine Sicke 8 auf, sondern verläuft ohne wesentliche Durchmesseränderungen bis zum abgerundeten Ende. Hierbei wird der O-Ring 5a von dem Nutgrund der Ringnut 13 und der Außenmantelfläche der Leitung 3 zusammengepresst, so dass eine Leckage verhindert werden kann.

Gemäß dem Ausführungsbeispiel, für das auf Fig. 4 Bezug genommen wird, wird im Gegensatz zu den zuvor beschriebenen Ausführungsbeispielen CO₂ (R744) als Kältemittel verwendet. Zur sicheren Abdichtung der einzelnen Leitungen 3 wird sowohl verdampferseitig als auch nutzerseitig, wie beim dritten Ausführungsbeispiel beschrieben, an Stelle des zweiten O-Rings 5b je eine Flachdichtung 5b' verwendet, wobei der Flansch 7 der Leitung 3 die Flachdichtung 5b' in eine ringförmige Ausnehmung im Expansionsorgan 1 presst. Die Anordnung des ersten O-Rings 5a entspricht der des ersten Ausführungsbeispiels. Bei den Dichtelementen handelt es sich in diesem Fall um metallische Dichtungen.

Gemäß einer nicht in der Zeichnung dargestellten Variante dieses Ausführungsbeispiels werden zwei metallische Flachdichtungen zur Abdichtung verwendet.

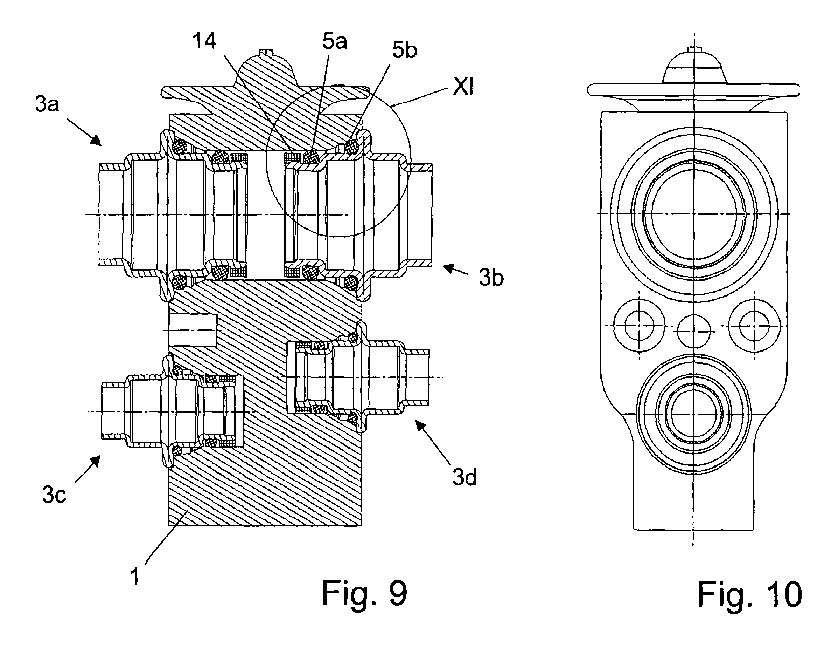

Figuren 9 bis 11 zeigen ein Expansionsventil 1 mit vier angeschlossenen Kältemittel-Leitungen 3, nämlich einer motorraumseitigen Saugleitung 3a, einer verdampferseitigen Saugleitung 3b, einer motorraumseitigen Druckleitung 3c und einer verdampferseitigen Druckleitung 3d.

Die Dichtwirkung wird gemäß dem neunten Ausführungsbeispiel jeweils mittels einer Dichtungsanordnung mit zwei Dichtelementen 4, vorliegend zwei O-Ringen 5, nämlich einem diagonalen, d.h. schräg zur Längsachse der Leitung belasteten, beabstandet vom Ende der Leitung 3 angeordneten O-Ring 5b und einem radialen, d.h. in radialer Richtung zur Längsachse der Leitung 3 belasteten, näher am Leitungsende angeordneten O-Ring 5a bewirkt.

Ferner ist ein Führungselement, vorliegend ein Führungsring 14 aus Kunststoff, am Leitungsendbereich vorgesehen, welches die Zentrierung sicherstellt. Der Führungsring 14 schützt während der Montage die beiden Dichtflächen des Expansionsventils 1 vor einer mechanischen Beschädigung.

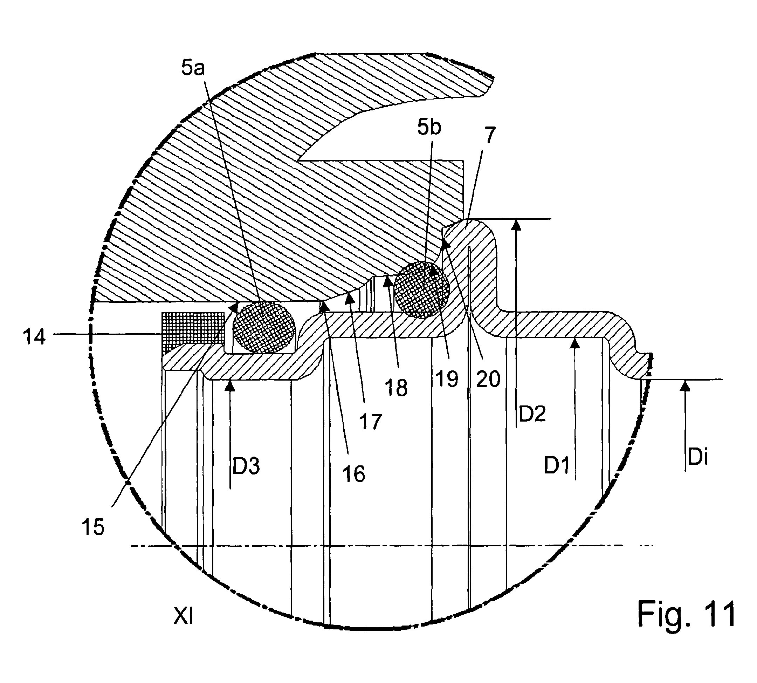

Auf Grund des sich ändernden Durchmessers der Leitung 3, siehe insbesondere Fig. 11, wird der radiale O-Ring 5a durch den Führungsring 14 und der diagonale O-Ring 5b durch den radialen O-Ring 5a gegen Abrutschen gesichert, wobei der Innendurchmesser des hinteren O-Rings 5b größer als der Innendurchmesser des leitungsendseitigen O-Rings 5a aber kleiner als der Außendurchmesser desselben ist.

Die Leitung 3 wird in ihrem Endbereich derart umgeformt, dass der Innendurchmesser mindestens dem des weiteren Verlaufs der Leitung 3 entspricht, so dass der hydraulisch wirksame Durchmesser im Bereich der Verbindung nicht verkleinert wird. Die Herstellung erfolgt folgendermaßen: Ausgehend vom Leitungsinnendurchmesser Di wird die Leitung zunächst auf einen größeren Leitungsinnendurchmesser D1 aufgeweitet, anschließend wird ein Flansch 7 mit einem Außendurchmesser D2 geformt. Zur Aufnahme des radialen O-Rings 5a wird das Leitungsende auf den Leitungsinnendurchmesser D3, der größer oder gleich dem Leitungsinnendurchmesser Di ist, gebracht und am Leitungsende etwas aufgeweitet, wobei auch eine Art Fase zur Aufnahme des Führungsrings 14 am Außenumfang des Leitungsendes angeformt wird.

Der Innendurchmesserverlauf des Expansionsventils 1 ist Folgender, wobei die Beschreibung von innen nach außen erfolgt: nach einem Bereich 15 mit konstantem Durchmesser folgt, verbunden über einen Übergangsradius 16 ein konischer Bereich 17 mit sich nach außen vergrößerndem Durchmesser, wobei der Winkel zwischen dem konischen Bereich 17 und der Leitungslängsachse 5° bis 30° beträgt. Anschließend folgt ein Übergangsbereich, ein zweiter konischer Bereich 18, wobei der Winkel zwischen dem zweiten konischen Bereich 18 und der Leitungslängsachse 2° bis 20° beträgt, und ein in einem Radius sich nach außen erweiternden Bereich 19, der tangential an den zweiten konischen Bereich 18 anschließt. Der Radius des sich nach außen erweiternden Bereichs 19 beträgt 2% bis 30% des Rohraußendurchmessers. Der Radius des nach außen erweiternden Bereichs 19 geht in eine Anlagefläche 20 für den Flansch 7 über.

Die Fixierung der Leitung 3 im Expansionsventil 1 kann mittels einer nicht dargestellten Halteplatte erfolgen, welche beispielsweise über Schrauben mit dem Expansionsventil 1 verbunden ist.

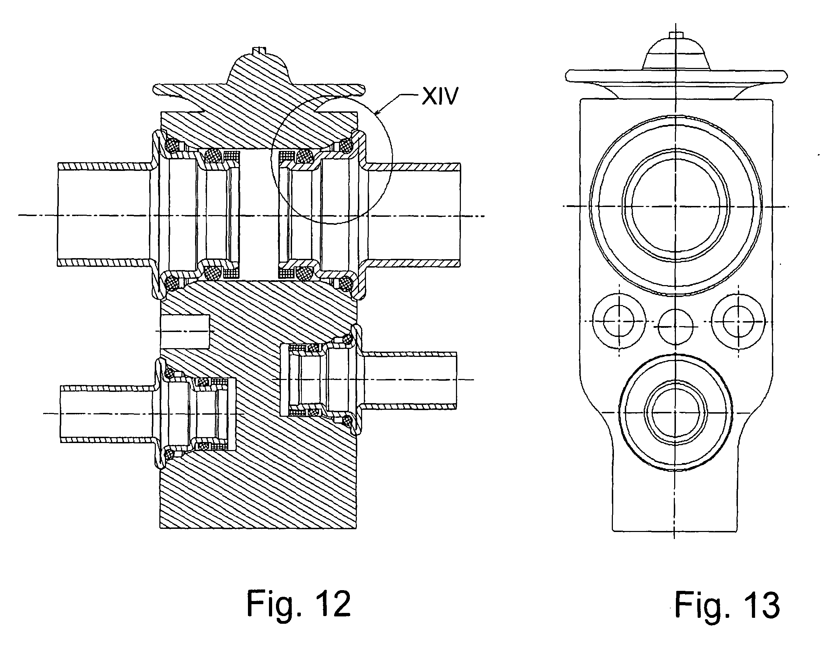

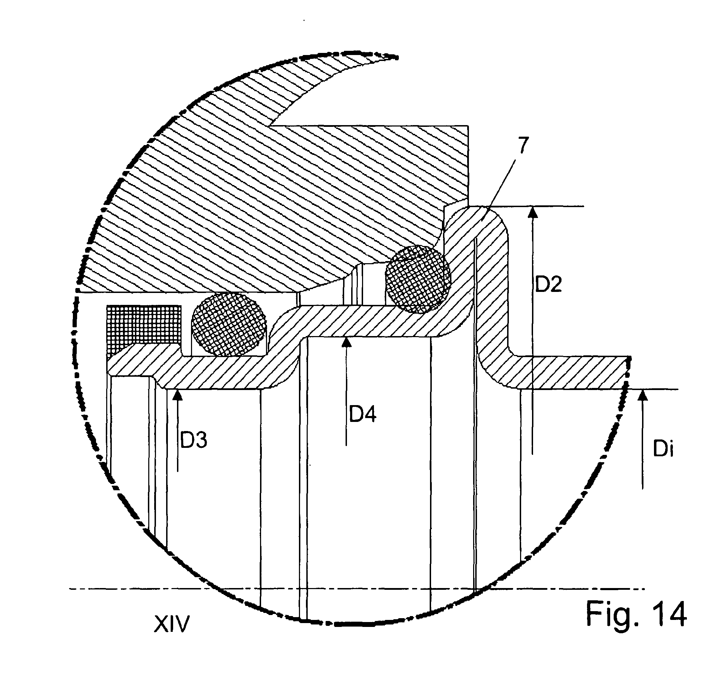

In den Figuren 12 bis 14 ist eine Variante des Ausführungsbeispiels von Fig. 9 dargestellt, welche abgesehen von den Durchmessern der Leitung 3 auf Grund einer anderen Umformung mit dem zuvor beschriebenen Ausführungsbeispiel übereinstimmt.

Die Leitung 3 wird gemäß der Variante in ihrem Endbereich derart umgeformt, dass der Innendurchmesser ebenfalls mindestens dem des weiteren Verlaufs der Leitung 3 entspricht, so dass auch bei dieser Variante der hydraulisch wirksame Durchmesser im Bereich der Verbindung nicht verkleinert wird. Die Herstellung erfolgt folgendermaßen: Ausgehend vom Leitungsinnendurchmesser Di wird die Leitung zunächst auf einen Außendurchmesser D2 aufgeweitet, anschließend wird ein Flansch 7 mit entsprechendem Außendurchmesser D2 geformt. Die Leitung 3 geht nach dem Flansch 7 in einen Leitungsinnendurchmesser D4 über. Zur Aufnahme des radialen O-Rings 5a wird das Leitungsende auf den Leitungsinnendurchmesser D3, der größer oder gleich dem Leitungsinnendurchmesser Di aber kleiner als der Leitungsinnendurchmesser D4 ist, gebracht und am Leitungsende etwas aufgeweitet, wobei wiederum eine Art Fase zur Aufnahme des Führungsrings 14 angeformt wird.

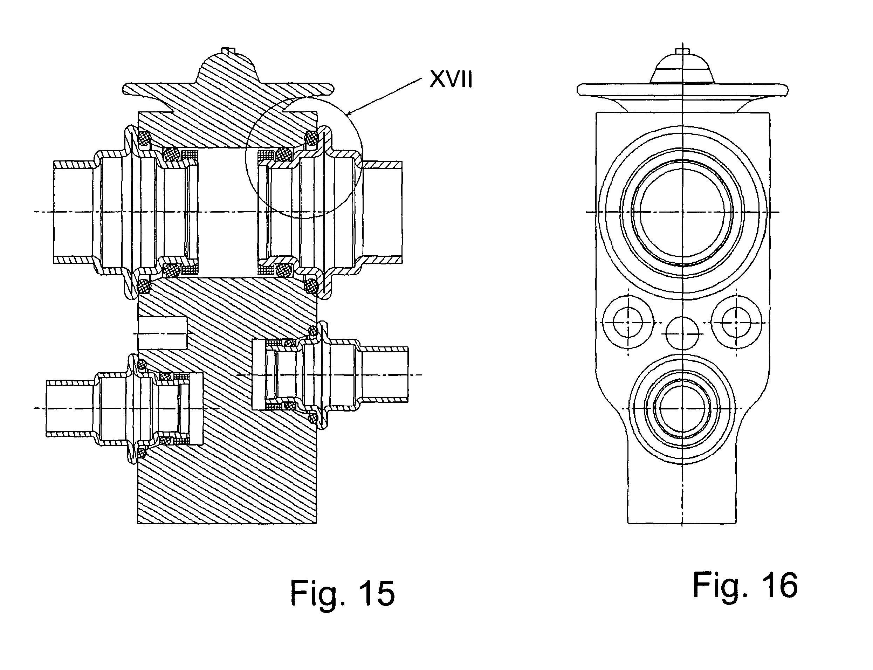

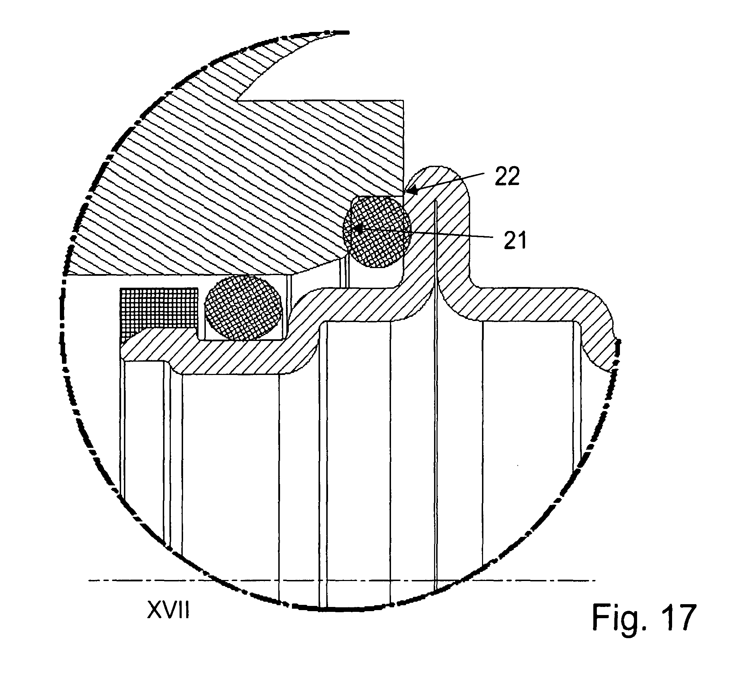

Gemäß dem Ausführungsbeispiel, das in den Figuren 15 bis 17 dargestellt ist, entspricht die Form der Leitung 3 und deren Herstellung der des Ausführungsbeispiels von Fig. 9, wobei auch eine Ausgestaltung gemäß der Variante des Ausführungsbeispiels von Fig. 9 möglich ist.

In Unterschied zum Ausführungsbeispiel von Fig. 9 ist der außenseitig angeordnete O-Ring 5b nicht kein diagonales Dichtelement, sondern ein axiales Dichtelement, d.h. es wird in Richtung der Leitungslängsachse mit Hilfe des Flansches 7 gegen seine im Wesentlichen in radialer Richtung bezüglich der Leitungslängsachse verlaufende Anlagefläche gepresst.

Der Innendurchmesserverlauf des Expansionsventils 1 ist Folgender, wobei die Beschreibung von innen nach außen erfolgt: nach einem Bereich 15 mit konstantem Durchmesser folgt, verbunden über einen Übergangsradius 16 ein konischer Bereich 17 mit sich nach außen vergrößerndem Durchmesser, wobei der Winkel zwischen dem konischen Bereich 17 und der Leitungslängsachse 5° bis 30° beträgt. Anschließend folgt ein Übergangsbereich. Es folgt ein in radialer Richtung zur Leitungslängsachse verlaufender Bereich 21, ein senkrecht, d.h. koaxial zur Leitungslängsachse verlaufender Bereich und ein wiederum in radialer Richtung zur Leitungslängsachse verlaufender Bereich 22, welcher als Anlage für den Flansch 7 dient und das Quetschen des O-Rings 5b begrenzt, jeweils getrennt voneinander durch abgerundete Übergänge.

### Bezugszeichenliste

- 1: Expansionsventil, Expansionsorgan
- 2a, 2b: Öffnung
- 3: Leitung
- 4: Dichtelement
- 5, 5a, 5b: O-Ring
- 5b': Flachdichtung
- 6: Dichtungsanordnung
- 7: Flansch
- 8: Sicke
- 11: Hilfselement
- 12: Ringnut
- 13: Ringnut
- 14: Führungsring
- 15: Bereich
- 16: Übergangsradius
- 17: konischer Bereich
- 18: zweiter konischer Bereich
- 19: Bereich
- 20: Anlagefläche
- 21: Bereich
- 22: Bereich

- Di: Leitungsinnendurchmesser
- D1: Leitungsinnendurchmesser
- D2: Außendurchmesser
- D3: Leitungsinnendurchmesser
- D4: Leitungsinnendurchmesser

## Patentansprüche

1. Expansionsorgan einer Kraftfahrzeug-Klimaanlage mit einer Dichtungsanordnung für einen Anschluss einer Leitung (3) an dem Expansionsorgan, bei dem zwei oder mehr Dichtelemente (4) zwischen der Leitung (3) und dem Expansionsorgan vorgesehen sind, **dadurch gekennzeichnet dass** eines dieser Dichtelemente (4) in einer an der Stirnfläche des Expansionsorgans vorgesehenen Ringnut (12) angeordnet ist.

2. Expansionsorgan nach Anspruch 1, **dadurch gekennzeichnet, dass** mindestens eines der Dichtelemente (4) ein O-Ring (5; 5a; 5b) ist.

3. Expansionsorgan nach Anspruch 1 oder 2, **dadurch gekennzeichnet, dass** mindestens eines der Dichtelemente (4) eine Flachdichtung (5b') oder eine Profildichtung ist.

4. Expansionsorgan nach einem der vorhergehenden Ansprüche, **dadurch gekennzeichnet, dass** mindestens ein Dichtelement (4) in einer am Außenumfang der Leitung vorgesehen Sicke (8) oder Nut angeordnet ist.

5. Expansionsorgan nach einem der vorhergehenden Ansprüche, **dadurch gekennzeichnet, dass** mindestens ein Dichtelement (4) in Anlage an einem am Außenumfang der Leitung vorgesehen Flansch (7) ist.

6. Expansionsorgan nach einem der vorhergehenden Ansprüche, **dadurch gekennzeichnet, dass** mindestens ein Dichtelement (4) am Außenumfang der Leitung (3) angeordnet und in Anlage an einem am Außenumfang der Leitung vorgesehen Flansch (7) ist.

7. Expansionsorgan nach einem der vorhergehenden Ansprüche, **dadurch gekennzeichnet, dass** ein Dichtelement (4) in einer an der Innenmantelfläche des Bauteils vorgesehenen Ringnut (13) angeordnet ist.

8. Expansionsorgan nach einem der vorhergehenden Ansprüche, **dadurch gekennzeichnet, dass** mindestens zwei der Dichtelemente (4) in unterschiedlicher Richtung abdichten.

9. Expansionsorgan nach einem der vorhergehenden Ansprüche, **dadurch gekennzeichnet, dass** mehrere insbesondere hintereinander angeordnete Dichtelemente in gleicher Richtung abdichten.

10. Expansionsorgan nach einem der vorhergehenden Ansprüche, **dadurch gekennzeichnet, dass** ein Dichtelement (4) einen Dichtspalt in axialer Richtung und ein Dichtelement (4) einen Dichtspalt in radialer Richtung bezüglich der Leitung (3) abdichtet.

11. Expansionsorgan nach einem der vorhergehenden Ansprüche, **dadurch gekennzeichnet, dass** ein Dichtelement (4) einen Dichtspalt in schräger Richtung bezüglich der Leitung (3) abdichtet.

12. Expansionsorgan nach einem der vorhergehenden Ansprüche, **dadurch gekennzeichnet, dass** ein Dichtelement (4) mittels eines Hilfselements (11) positioniert ist.

13. Expansionsorgan nach einem der vorhergehenden Ansprüche, **dadurch gekennzeichnet, dass** die Übergänge zwischen einzelnen Stufen mit unterschiedlichen Durchmessern abgerundet sind.

14. Expansionsorgan nach einem der vorhergehenden Ansprüche, **dadurch gekennzeichnet**, mindestens ein metallisches Dichtelement und/oder ein Dichtelement aus EPDM oder HNBR Teil der Dichtungsanordnung (6) ist.

15. Expansionsorgan nach einem der vorhergehenden Ansprüche, **dadurch gekennzeichnet**, in einem Leitungsendbereich ein Führungselement angeordnet ist.

16. Expansionsorgan nach Anspruch 14, **dadurch gekennzeichnet, dass** das Führungselement ein Führungsring (14) ist, welcher eine dem Außenumfang des Leitungsendbereichs entsprechende Innenkontur aufweist, wobei sich der Außenumfang des Leitungsendbereichs zum Leitungsende hin verkleinert.

17. Expansionsorgan nach einem der vorhergehenden Ansprüche, **dadurch gekennzeichnet, dass** eine innere Querschnittsfläche der Dichtungsanordnung so groß wie oder größer als eine innere Querschnittsfläche der Leitung und/oder des Bauteils ist.

## Claims

1. Expansion device with sealing arrangement for a connection of a line to the expansion device (3) of a vehicle air-conditioning device, wherein two or more sealing elements (4) are provided between the line (3) and the expansion device, **characterized in that** one of these sealing elements (4) is arranged in an annular groove (12) provided at the frontal area of the expansion device.

2. Expansion device according to claim 1, **characterized in that** at least one of the sealing elements (4) is an O-ring (5; 5a; 5b).

3. Expansion device according to claim 1 or 2, **characterized in that** at least one of the sealing elements (4) is a flat sealing (5b') or a profile sealing.

4. Expansion device according to one of the previous claims, **characterized in that** at least one sealing element (4) is arranged at a seam (8) or groove provided at the outer extent of the line.

5. Expansion device according to one of the previous claims, **characterized in that** at least one of the sealing elements (4) is attached to a flange provided at the outward extent of the line.

6. Expansion device according to one of the previous claims, **characterized in that** at least one sealing element (4) is arranged at the outward extent of the line (3) and is attached to the flange provided at the outward extent of the line (7).

7. Expansion device according to one of the previous claims, **characterized in that** one sealing element (4) is arranged at the annular groove (13) provided at the interior lateral area surface of the device.

8. Expansion device according to one of the previous claims, **characterized in that** at least two of the sealing elements (4) seal in different directions.

9. Expansion device according to one of the previous claims, **characterized in that** several especially consecutively arranged sealing elements seal in the same direction.

10. Expansion device according to one of the previous claims, **characterized in that** one sealing element (4) seals a packed sealing gap in axial direction and one sealing element (4) seals a packed sealing gap in a radial direction with regard to the line (3).

11. Expansion device according to one of the previous claims, **characterized in that** one sealing element (4) seals a packed sealing gap in angular direction with regard to the line (3).

12. Expansion device according to one of the previous claims, **characterized in that** one sealing element (4) is positioned by means of an auxiliary element (11).

13. Expansion device according to one of the previous claims, **characterized in that** the transitions between the single steps are chamfered by different diameters.

14. Expansion device according to one of the previous claims, **characterized in that** at least one metallic sealing element and/or a sealing element of EPDM or HNBR is part of the sealing arrangement.

15. Expansion device according to one of the previous claims, **characterized in that** a guide element is arranged in an end area of the line.

16. Expansion device according to one of the previous claims, **characterized in that** the guide element is a guide ring (14) that comprises an inner contour that corresponds to the outer circumference of the end area of the line whereas the outer circumference of the end area of the line will be reduced until the end of the line.

17. Expansion device according to one of the previous claims, **characterized in that** one inner cross sectional area of the sealing arrangement is as big as or bigger than the inner cross sectional area of the line and/or of the device.

## Revendications

1. Détendeur d'un système de climatisation d'un véhicule automobile, comprenant un dispositif d'étanchéité pour un raccordement d'une conduite (3) au détendeur dans lequel il est prévu deux éléments d'étanchéité (4), ou plus, entre la conduite (3) et le détendeur,
**caractérisé en ce que** l'un de ces éléments d'étanchéité (4) est disposé dans une rainure annulaire (12) prévue sur la surface frontale du détendeur.

2. Détendeur selon la revendication 1, **caractérisé en ce qu'**au moins l'un des éléments d'étanchéité (4) est un joint torique (5 ; 5a ; 5b).

3. Détendeur selon la revendication 1 ou 2, **caractérisé en ce qu'**au moins l'un des éléments d'étanchéité (4) est un joint plat (5b') ou un joint profilé.

4. Détendeur selon l'une quelconque des revendications précédentes, **caractérisé en ce qu'**au moins un élément d'étanchéité (4) est disposé dans une moulure (8) ou une rainure prévue sur la circonférence extérieure de la conduite.

5. Détendeur selon l'une quelconque des revendications précédentes, **caractérisé en ce qu'**au moins un élément d'étanchéité (4) est en appui sur une bride (7) prévue sur la circonférence extérieure de la conduite.

6. Détendeur selon l'une quelconque des revendications précédentes, **caractérisé en ce qu'**au moins un élément d'étanchéité (4) est disposé sur la circonférence extérieure de la conduite (3) et en appui sur une bride (7) prévue sur la circonférence extérieure de la conduite.

7. Détendeur selon l'une quelconque des revendications précédentes, **caractérisé en ce qu'**un élément d'étanchéité (4) est disposé dans une rainure annulaire (13) prévue sur la surface latérale intérieure du composant.

8. Détendeur selon l'une quelconque des revendications précédentes, **caractérisé en ce qu'**au moins deux des éléments d'étanchéité (4) assurent l'étanchéité dans une direction différente.

9. Détendeur selon l'une quelconque des revendications précédentes, **caractérisé en ce que** plusieurs éléments d'étanchéité disposés en particulier les uns derrière les autres assurent l'étanchéité dans la même direction.

10. Détendeur selon l'une quelconque des revendications précédentes, **caractérisé en ce qu'**un élément d'étanchéité (4) assure l'étanchéité d'une fente d'étanchéité dans une direction axiale, un élément d'étanchéité (4) assurant l'étanchéité d'une fente d'étanchéité dans une direction radiale par rapport à la conduite (3).

11. Détendeur selon l'une quelconque des revendications précédentes, **caractérisé en ce qu'**un élément d'étanchéité (4) assure l'étanchéité d'une fente d'étanchéité dans une direction oblique par rapport à la conduite (3).

12. Détendeur selon l'une quelconque des revendications précédentes, **caractérisé en ce qu'**un élément d'étanchéité (4) est positionné au moyen d'un élément auxiliaire (11).

13. Détendeur selon l'une quelconque des revendications précédentes, **caractérisé en ce que** les passages entre différents niveaux comportant des diamètres différents sont arrondis.

14. Détendeur selon l'une quelconque des revendications précédentes, **caractérisé en ce qu'**au moins un élément d'étanchéité métallique et / ou un élément d'étanchéité composé d'un terpolymère d'éthylène, propylène diène (EPDM) ou d'un caoutchouc à base de butadiène et de nitrile hydrogéné (HNBR) fait partie du dispositif d'étanchéité (6).

15. Détendeur selon l'une quelconque des revendications précédentes, **caractérisé en ce qu'**un élément de guidage est disposé dans une zone d'extrémité de la conduite.

16. Détendeur selon la revendication 14, **caractérisé en ce que** l'élément de guidage est une bague de guidage (14) qui présente un contour intérieur correspondant à la circonférence extérieure de la zone d'extrémité de la conduite, la circonférence extérieure de la zone d'extrémité de la conduite allant en diminuant vers l'extrémité de la conduite.

17. Détendeur selon l'une quelconque des revendications précédentes, **caractérisé en ce qu'**une surface de section intérieure du dispositif d'étanchéité est aussi importante ou plus importante qu'une surface de section intérieure de la conduite et / ou du composant.
